# EUROPEAN PATENT APPLICATION

(11) **EP 4 810 241 A1**
(43) Date of publication of application: **23.09.2026**
(21) Application number: 25165459.6
(22) Date of filing: 21.03.2025
(51) Int. Cl.: B32B 1/08, B32B 5/02, B32B 5/24, B32B 7/03, B32B 7/12, B32B 15/08, B32B 27/08, B32B 27/22, B32B 27/32, B32B 27/38, B32B 27/40

(54) **PIPE AND PIPE LINE WITH FIBRE-REINFORCED PLASTIC CLADDING**

(71) Applicant: RFD Innovations AG, 6004 Luzern (CH)
(72) Inventor: Welker, Daniel, 6004 Luzern (CH); Welker, Ruirui, 6004 Luzern (CH)
(74) Representative: Eisenführ Speiser

(57) **Abstract**

The invention refers to a pipe for a pipeline. The pipe comprises a tube (12) that is enclosed by a fibre rein-forced protective cladding (16). The fibre rein-forced protective cladding (16) comprises reinforcing fibres embedded in a matrix made from a thermoset plastic material, in particular a thermoset resin vinylester resin, polyester resin or epoxy resin. According to the invention, the thermoset plastic material com-prising a reactive plasticiser in an amount of between 0.25% and 30% of weight of the matrix.

## Description

According to one aspect, the invention relates to a pipe with a fibre-reinforced protective cladding enclosing the pipe surface. Such pipe can comprise a tube made of plastic, for example polyolefins, or of metal, for example steel, or of a combination thereof, for example a metal pipe with an outer surface of plastic materials, for example fusion-bonded epoxy, polyethylene, polypropylene and/or polyurethane or hybrid pipes for example with a combination of layers such as steel pipes with a sheathing of polyurethane-foam and polyolefin-based casing materials for temperature insulation.

Pipes for the transport of liquid or gaseous media installed buried or laid on the sea-bed are known to be either made of plastic, such as for example polyethylene or polypropylene or comprise a metal tube, for example a steel tube covered with plastic materials for corrosion protection, for example fusion-bonded epoxy, polyethylene, polypropylene and/or polyurethane. While such plastic materials provide good corrosion protection on the one hand, as the moisture of the surrounding environment and/or electrolytes cannot cause corrosion of the pipe (in the case of plastic pipes) respectively cannot come into contact with the metallic pipe materials (in the case of metallic pipes). On the other hand, plastic materials commonly used for such corrosion prevention or protection, such as fusion-bonded epoxy, polyethylene, polypropylene and/or polyurethane have only a relatively low mechanical strength. This means that physical forces acting on the plastic materials of the pipe during installation or operation of the pipeline can lead to damages of such plastic materials. Such forces could be static compression or pulling forces in axial as well as radial direction of the pipe (static forces) as well as abrasion, impact, indentation or gouging or similar forces (mechanical forces).

To protect the pipe against mechanical forces, it is known to additionally provide the pipe with a fibre-cement coating, a concrete-weight coating or a fibre reinforced plastic (FRP) cladding, in particular a glass-fibre reinforced plastic (GRP) cladding.

Metal pipes with a glass-fibre reinforced plastic cladding are inter alia disclosed in WO 01/05580 A1 and WO 2020/002660 A1. The glass-fibre reinforced plastic cladding protects the pipe during trenchless pipe-laying. For the open trench pipe-laying, metal pipes with both plastic coating and/or an additional fibre cement mortar top coating are used. For laying on the sea-bed, pipes with plastic coating and optionally with an additional concrete-weight cement coating are used. Metal pipes with a fibre reinforced plastic cladding are also used for open-trench pipe-laying.

For producing the fibre reinforced plastic cladding, resin-impregnated or resin-soaked fibre fabrics are wound around a pipe. The fibre fabrics may be unidirectional (UD) fabrics wherein the majority of the fibres is orientated in a longitudinal direction of the fibre fabric. Bidirectional fabrics (also called biaxial fibre fabrics) can be fibre webs with fibres running along the longitudinal direction of the fibre fabric and fibres perpendicular to the longitudinal direction of the fibre fabric. These fabrics are called 0/90 fibre fabrics, indicating the angle of the fibres with respect to longitudinal direction of the fibre fabric, i.e. 0° and 90°. Other fibre fabrics are for instance triaxial fibres where fibres are arranged in 3 directions for example 0/90/45 or biaxial 45/45 fibre fabrics wherein fibre are arranged at a +45° angle with respect to the longitudinal direction of the fibre fabric while other fibres at a -45° angle with respect to the longitudinal direction of the fibre fabric.

Fibres are typically composed of filaments that run in parallel to each other and overlap in a longitudinal direction of the fibre. Thus, a fibre may have a virtually endless length.

Plastic pipes are commonly not protected with a fibre-reinforced plastic cladding. Instead they can be directly enforced by integration of fibres, such as glass fibres, into the plastic material of the pipe, for example during the extrusion process.

Hybrid pipes, such as metal pipes with temperature-insulation layers are disclosed in WO 2023/198902 A1 as a system with glass-fibre reinforced cladding for strengthening and protection of the pipe.

With respect to the bending of pipes prior to or during the installation of the pipeline, the inventor recognized that the fibre-reinforced plastic cladding is a relatively stiff material and hence can affect the bendability of the pipe or pipeline or bending can affect the fibre-reinforced cladding. In particular the static and/or mechanical properties of the fibre-reinforced plastic cladding may be compromised by bending the pipe.

Fibre-reinforced plastic cladding traditionally used in trenchless installation methods, such as horizontal-directional drillings (HDDs) commonly has to conform with bending requirements of not less than 400 times the nominal pipe diameter (Dₙ) - i.e. 400 x Dₙ - in some instances of not less than 1000 times Dₙ, as these are the acceptable bending angles in the elastic phase of steel pipes, taking into consideration steel grades and acceptable safety factors.

However, alternative pipe-laying systems in onshore as well as offshore installations require significantly tighter bending radii, which commonly could not be achieved by fibre-reinforced plastic claddings without damage to the materials. Such bending of pipes and/or pipelines occurs regularly during pipe-laying operations, for example in the form of:
- cold-bending of pipes in the field prior to welding of such pipes into a pipeline segment during open-trench installation with bending angles of 0.5° to 1.5° per bending step commonly being dependant on pipe dimensions, hence a total bending radius of commonly approx. 40 x Dₙ - larger bending angle thus results from multiple small bending steps that are longitudinally spaced from each other;
- reeling/coiling pipes in preparation of putting entire welded pipe strings onto a pipe-laying vessel for reel-laying with bending radii commonly around 40 x Dₙ;
- s-laying or j-laying of a pipeline from a pipe-laying vessel into the sea with minimum bending requirements of 50 to 100 x Dₙ;
- pre-stretching pipelines or pipeline segments with a small radius prior to installation;
- installation of pipelines with a small radius during trenchless installation methodologies, for example to achieve tight turns or steep declines in the borehole with bending requirements below 100 x Dₙ.

EP 4 471 312 A1 discloses a pipe with a fibre reinforced cladding that is adapted to allow bending.

It is an object of the invention to provide a solution that avoids negative effects of bending prior to or during pipe-laying on fibre-reinforced claddings.

According to the invention, the object is achieved by means of a pipe comprising a plastic tube or a metal tube, optionally covered by a plastic sheath, in particular with a fusion-bonded epoxy (FBE) coating or a thermoplastic sheath or both and with a fibre-reinforced protective cladding enclosing the outer surface area of the pipe (with the plastic sheath, if applicable). The fibre-reinforced protective cladding comprises reinforcing fibres embedded in a thermoset plastic material. The thermoset plastic material embedding the fibres of the fibre-reinforced protective cladding preferably is a polyester-, a vinylester- or an epoxy resin comprising a reactive plasticizer. Accordingly, the tube is a metal tube, for instance a steel tube, or a plastic tube. If the tube is a metal tube, the pipe may comprise a fusion bonded epoxy (FBE layer) applied to the metal tube or a thermoplastic sheath applied to the metal tube or both, a fusion bonded epoxy layer enclosed by a thermoplastic sheath. The pipe further comprises a fibre reinforced protective cladding that encloses the plastic tube or the metal tube with the FBE layer and/or thermoplastic sheath.

The invention includes the finding that a composite fibre-reinforced protective cladding can withstand higher impacts and much closer bending angles if the thermoset material of the matrix comprises a reactive plasticizer. Surprisingly, the hardness of the composite fibre-reinforced protective cladding is hardly reduced by the reactive plasticizer while the impact strength is improved and the bendability is increased very significantly.

For instance, a composite fibre-reinforced protective cladding comprising glass fibres embedded in polyester-resin without a reactive plasticizer may have a Shore-D hardness of 75-85 while a composite fibre-reinforced protective cladding comprising glass fibres embedded in polyester-resin with a reactive plasticizer may have a hardness of 70-85.

On the other hand, bendability is further increased as a result from adding a reactive plasticizer to the thermosetting plastic material of the matrix that embeds the fibres. For example, a specimen of a composite fibre-reinforced cladding comprising glass fibres embedded in polyester-resin with a reactive plasticizer can by tested in a three-point bending test (3-Punkt Biegeversuch) according to DIN EN ISO 14125:2011-05 incorporating ISO 178:2019. In such three point bending test, a test specimen of a rectangular cross-section, resting on two supports, is deflected by means of a loading edge acting on the specimen midway between the supports. The test specimen is deflected in this way at a constant rate at midspan until a break occurs at the outer surface of the specimen or until 50% of the maximum stress or the maximum deflection measurement point is reached, whichever occurs first. During this procedure, the force applied to the specimen and the resulting deflection of the specimen at midspan are measured.

While a specimen without added reactive plasticiser only can withstand a deflection of around 10%, a specimen with added reactive plasticiser can withstand deflections of over 50%, corresponding to a bending angle of 90° without damage to the fibres in the matrix.

The inventor found that the improved bendability not only applies to a specimen of the composite fibre-reinforced protective cladding alone but also to a composite fibre-reinforced protective cladding wrapped around a steel pipe. This allows bending of a pipe or pipeline without damaging the composite fibre-reinforced protective cladding of the pipe or pipeline.

The inventor further found that the fibre-reinforced plastic cladding material around pipes according to the invention is less brittle and less prone to microscopic cracks that otherwise may occur after curing, especially upon bending, impacts or other mechanical stresses on the pipe/pipeline. Therefore, the capability of such fibre-reinforced plastic cladding for preventing moisture and/or electrolytes to enter or traverse the fibre-reinforced plastic materials is maintained during and after bending or other mechanical impacts and a reduction of the corrosion protection effect of the fibre-reinforced plastic cladding due to bending or other mechanical impacts is avoided.

The reactive plasticiser preferably comprises Triglycerides, Polyisoprenes, Polybutadienes, Polysiloxanes, Polyethers, Polyesters, Polycarbonates and/or their respective functionalised subproducts. The amount of plasticiser added to the thermoset plastic material of the composite fibre-reinforced protective cladding preferably is between 0.25% and 30% per weight of the thermoset plastic material including the plasticiser but excluding the fibres, other fillers or additives, with such mixing ratio to be determined in accordance with the specific bending requirements of the material. The amount of reactive plasticiser relates to the combined weight of the plasticiser and the thermoset resin, without fillers, fibres or further additives.

The inventor further found that the bendability of the pipe assembly can also be increased if the fibres of the composite fibre-reinforced protective cladding that are normally arranged along the longitudinal pipe axis are arranged at an angle with respect to the longitudinal axis of the pipe. The angle can be at least +/- 20° with respect to the longitudinal pipe axis and preferably at least +/- 40° with respect to the longitudinal pipe axis. The alignment of fibres of the composite fibre-reinforced protective cladding that are typically arranged along a circumferential direction are having only a minor impact on the bendability. This fibre orientation deviating from the longitudinal axis of the pipe can be achieved by winding the fibres in a helical manner around the pipe. Preferably, layers of fibres are wound with a different winding sense around the pipes resulting in helices with different chirality, i.e. at least one left-handed helix and at least one right-handed helix. In a preferred embodiment, the fibres of one layer of the fibre-reinforced protective cladding are arranged at a first angle α with respect to the longitudinal axis of the pipe, while the fibres of another - for instance second - layer of the fibre-reinforced protective cladding are arranged at a second angle β with respect to the longitudinal axis of the pipe. In preferred embodiments the angles α and β are different, i.e. the orientation of the fibres of the first layer of the fibre-reinforced protective cladding and the orientation of the fibres of the first layer of the fibre-reinforced protective cladding with respect to the longitudinal axis of the pipe are different. In one layer, the fibres may be arranged at an angle between 25° and 40° with respect to the longitudinal axis of the pipe, while in another layer fibres may be arranged at an angle between 75° and 89° with respect to the longitudinal axis of the pipe.

Instead of winding fibre fabrics such as unidirectional (UD) fibre fabrics with fibres arranged in a longitudinal direction of the fibre fabric, a 45/45 fibre fabric may be used that is a fibre web where the fibres of the web are orientated at an angle of for instance +/- 45° with respect to the longitudinal axis of the fibre fabric. In the latter case, the 45/45 fibre fabric may even be arranged along a longitudinal axis of the pipe since the fibres of the fibre fabric are arranged at angles of for instance +/- 45° with respect to the fibre fabric.

In preferred embodiments, the fibres are orientated at angles between at least 20° and at most 50° with respect to the longitudinal axis of the pipe. The minimum angle of the fibres with respect to the longitudinal axis of the pipe thus is at least 20°, preferably at least 25° or at least 40°. The maximum angle of the fibres with respect to the longitudinal axis of the pipe thus is at least 20°,

The arrangement of the fibres at an angle of more than 20° or 25° with respect to the longitudinal axis already prevents damages that may occur as a result of bending to a large extent, even if the resin matrix wherein the fibres are embedded does not comprise a reactive plasticiser. Likewise, the use of a reactive plasticiser alone also prevents damages that may occur as a result of bending to a large extent. The best results are achieved if the resin matrix comprises a reactive plasticiser and if the fibres are arranged at an angle of more than 25° with respect to the longitudinal axis of the pipe.

In an embodiment, the reinforcing fibres are provided as rovings (e.g. UD fibre fabrics) or fibre webs, said rovings or fibre webs being wound around the plastic tube or the plastic sheath in a helical manner.

The reinforcing fibres preferably comprise glass fibres, aramid fibres, carbon fibres and/or basalt fibres that may be provided as a mat, a cloth - for instance textile glass - or rovings. The fibres may be provided as elongate fibre fabric.

In further embodiments, the fibre-reinforced cladding may comprise randomly orientated, short fibres, in particular short glass or basalt fibres. Short fibres may be fibres wherein at least 90% of the fibre have a length of less than 250 mm or less than 100 mm, preferably less than 50 mm or less than 20 mm. Short fibres may be cut rovings. Preferably at least 99% of all fibres of a layer of the fibre reinforced plastic cladding are short fibres. In many use cases, the use of short fibres is avoided because the use of short fibres can affect the tensile strength of a fibre reinforced plastic material. The inventor found, however, that short fibres embedded in a matrix made of a thermoset resin comprising a reactive plasticiser result in both, good mechanical properties regarding the protection of pipes and a good bendability. In alternative embodiments, the fibre reinforced plastic cladding of a pipe may comprise FRP layers containing short fibres and FRP layers comprising long fibres, for instance rovings or fibre cloth embedded in a matrix comprising a thermoset resin and preferably also a reactive plasticiser. In other embodiments, all FRP layers of the fibre reinforced cladding may be made from short fibres embedded in a matrix comprising a thermoset resin and preferably also a reactive plasticiser.

The fibre reinforced protective cladding comprising randomly orientated short fibres embedded in a matrix made from a thermoset plastic material can be produced by spraying a mixture containing non-cured thermoset plastic material and short fibres on an exterior surface of the pipe. The viscosity of the non-cured thermoplastic material can be adjusted to be suitable for spraying. This can be achieved by using a solvent or a thixotropic agent. Preferably the sprayed non-cured thermoset plastic material comprises a reactive plasticiser in an amount specified above.

The fibre reinforced protective cladding may comprise more than two layers of reinforcing fibres.

Preferably, the layers of reinforcing fibres are applied in a wet-in-wet process wherein a further layer of fibre reinforced plastic material is plied on another layer of fibre reinforced plastic material while the resin of the other layer of fibre reinforced plastic material is not fully cured.

One or more layers of the fibre reinforced plastic cladding may comprise further additives beyond a reactive plasticiser.

A further aspect of the invention is a bend pipeline that comprises a plurality of pipes wherein each pipe comprises a protective fibre reinforced plastic cladding. The pipes of the pipeline are joint at their respective longitudinal ends. The protective fibre reinforced plastic cladding of at least some of the pipes comprises fibres wherein at least some of the fibres are arranged at an angle of more the 20° and preferably more than 40° with respect to the longitudinal axis of the pipe.

The pipes of the pipeline preferably are joint by way of welding. Prior to welding, longitudinal end sections of the pipes are devoid of a protective fibre reinforced plastic cladding while each pipe is provided with a protective fibre reinforced plastic cladding except for their longitudinal end sections. The length of each longitudinal end section not being enclosed by a protective fibre reinforced plastic cladding preferably is shorter than 1 m. After welding, a protective fibre reinforced plastic cladding is applied to those longitudinal end sections that were devoid of a protective fibre reinforced plastic cladding prior to welding, thus providing a pipeline that has a protective fibre reinforced plastic cladding that continues over a plurality of pipes of the pipeline.

The protective fibre reinforced plastic cladding preferably comprises fibres, such as glass fibres, and a matrix comprising a thermoset resin and a reactive plasticiser. A preferred pipeline therefore is comprised of a plurality of pipes wherein at least some of the pipes are provided with a protective fibre reinforced plastic cladding comprising fibres that are arranged at an angle of more the 20° and preferably more than 40° with respect to a longitudinal axis of the pipe and a that are embedded in a matrix comprising a thermosetting resin and a reactive plasticiser.

In an embodiment, the pipeline is wound on a reel for pipe-laying, in particular for off-shore pipe-laying.

Further aspects concern a pipe with a bending angle of more than 5° and a bending radius corresponding to less than 50 times the nominal pipe radius Dₙ, wherein the pipe comprises a tube and a fibre reinforced protective cladding, wherein the fibre reinforced protective cladding comprises fibres embedded in a plastic matrix made from vinylester-, polyester-or epoxy-resin. According to one embodiment the fibres of the fibre reinforced protective cladding are orientated at an angle of more than 20° or 25° with respect to a longitudinal axis of the pipe. According to an alternative embodiment the matrix comprises a reactive plasticiser. According to yet another embodiment, the fibres of the fibre reinforced protective cladding are orientated at an angle of more than 20° or 25° with respect to a longitudinal axis of the pipe and the matrix embedding the fibres and being made from thermoset plastic material comprises a reactive plasticiser. In these embodiments, the fibre reinforced protective cladding preferably comprise at least 10% of fibres that are arranged at an angle of less than 80°, preferably less than 60° or less than 50° with respect to a longitudinal axis of the pipe. Further details of the invention shall now be described by way of example with respect to the attached drawing.
- Fig. 1: illustrates a bend pipe assembly;
- Fig. 2: of the drawing is a longitudinal cross-sectional view of a first embodiment of plastic cover protected pipe assembly;
- Fig. 3: illustrates how a fibre orientation of more than 20° with respect to a longitudinal axis of a pipe can be achieved;
- Fig. 4: illustrates how right-handed and left-handed helical fibre orientations of more than 20° can be achieved.
- Fig. 5: illustrates a 3-point bending test;
- Fig. 6: shows a reel with a pipeline according to the invention wound thereon; and
- Fig. 7: illustrates a joint of two pipes of a pipeline;
- Fig. 8: illustrates producing of a bend pipe by means of a sequence of small individual bending steps; and
- Fig. 9: is a schematic diagram illustrating the geometric parameters of a bend pend produced as illustrated in figure 8.

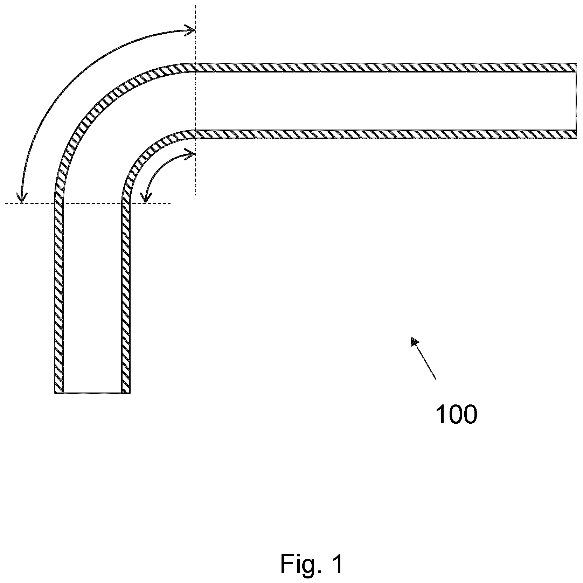

As shown in figure 1, bending of a pipe assembly 10 results in compression and/or elongation of portions of the pipe assembly. This typically affects the integrity of a coating or a sheathing applied to the pipe assembly.

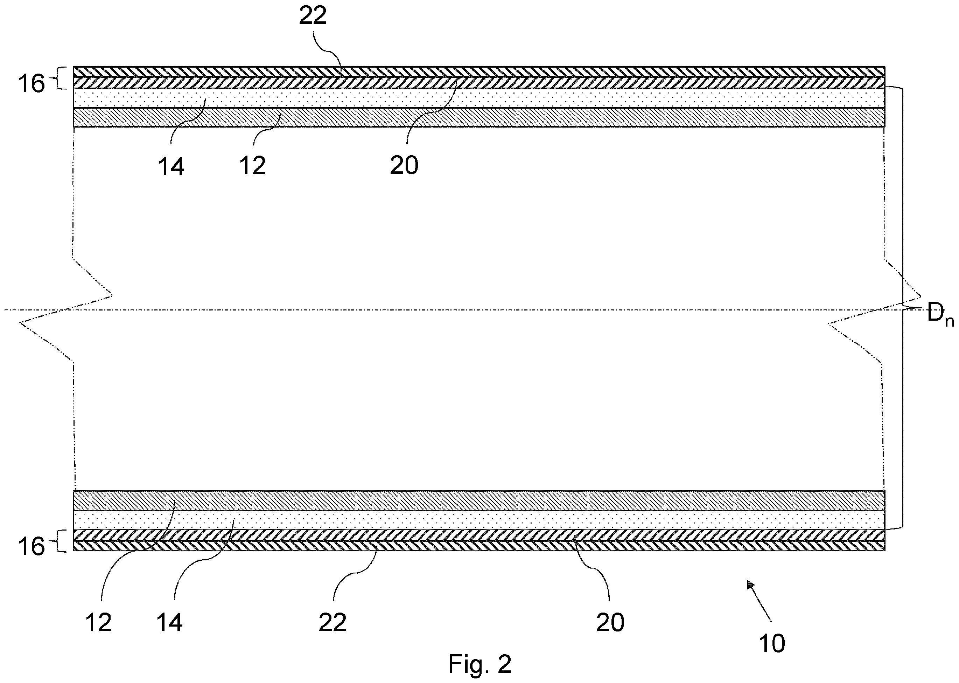

Figure 2 illustrates a pipe assembly 10 with metal pipe 12 that is enclosed by a plastic sheath 14 that in turn is enclosed by the fibre reinforced protective cladding 16.

The pipe assembly 10 shown in Fig. 2 comprises a metal pipe 12 that is enclosed by a plastic sheath 14. The plastic sheath 14 preferably comprises a fusion bonded epoxy (FBE) coating or a thermoplastic sheath, for instance a thermoplastic sheath made of Polyethylene (PE), Polypropylene (PP) or Polyurethane (PU), or both, a fusion bonded epoxy (FBE) coating enclosed by a thermoplastic sheath. If a fusion bonded epoxy (FBE) coating is used in combination with a thermoplastic sheath, an adhesive layer (not shown) may be provided between the fusion bonded epoxy (FBE) coating and thermoplastic sheath 14 enclosing the fusion bonded epoxy (FBE) coating.

The plastic sheath 14 is enclosed by a fibre reinforced protective cladding 16. As already known from the prior art, the fibre reinforced protective cladding preferably is made from a thermoset resin, for instance vinylester-, polyester- or epoxy resin, and reinforcing fibres embedded therein. The reinforcing fibres preferably are glass-fibres. The glass-fibres may be provided as glass mat, glass cloth (textile glass) or glass rovings. Before application on a pipe, the glass fibres can be arranged in elongate fibre fabrics 24.

A pipe 10 may have a nominal diameter Dₙ between 50 mm and 1000 mm or more. The fibre reinforced protective cladding 16 preferably has a thickness of between 1.5 mm and 75 mm, or even more preferred of between 2.5 mm and 50 mm.

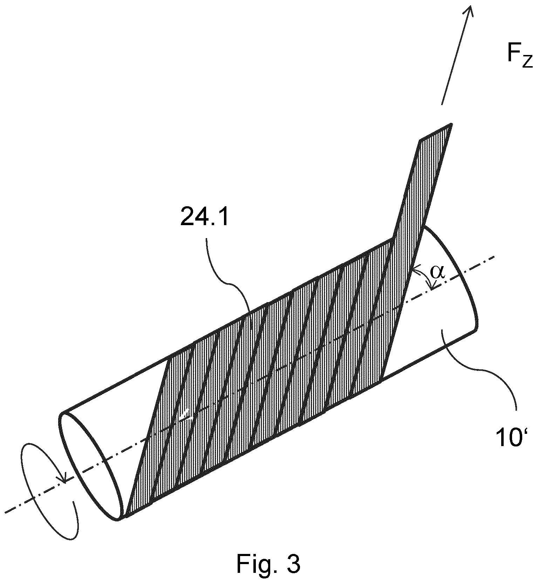

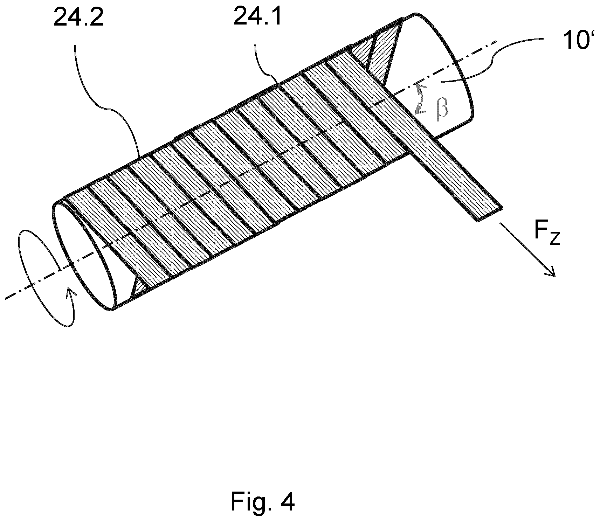

Preferably, the glass-fibres are provided as an elongate fibre fabric 24 that can be wound around the plastic sheath 14 in two different winding directions, thus forming at least one right-handed helix and one left-handed helix as illustrated in figures 3 and 4. The fibre reinforced protective cladding 16 may comprise several layers of reinforcing fibres as, for instance, described in WO 2020/002660 A1 or US 2023/0052636 A1. In particular, one layer fibre reinforced protective cladding 16 may be produced by winding a fibre fabric 24.1 in a helical manner around a pipe 10' with a first winding sense and a further layer fibre reinforced protective cladding 16 may be produced by winding a further fibre fabric 24.2 in a helical manner around a pipe 10' with a second, opposite winding sense; see figure 4. The fibre fabrics 24 may be composed of rovings or of a woven fibre web.

In the preferred embodiment illustrated in figures 3 and 4, the fibres of one layer of the fibre-reinforced protective cladding 16 are arranged at a first angle α with respect to the longitudinal axis of the pipe (see figure 3), while the fibres of another - for instance second - layer of the fibre-reinforced protective cladding 16 are arranged at a second angle β with respect to the longitudinal axis of the pipe; see figure 4. According to these preferred embodiments the angles α and β are different, i.e. the orientation of the fibres of the first layer of the fibre-reinforced protective cladding 16 and the orientation of the fibres of the first layer of the fibre-reinforced protective cladding 16 with respect to the longitudinal axis of the pipe are different. In one layer, the fibres may be arranged at an angle α between 25° and 40° with respect to the longitudinal axis of the pipe, while in another layer fibres may be arranged at an angle β between 75° and 89° with respect to the longitudinal axis of the pipe.

A preferred fibre orientation of the fibres can be achieved as illustrated in figures 3 and 4 by winding fibre fabrics 24 around the pipe 10' in a helical manner.

Alternatively, a fibre fabric may be used that is a fibre web where the fibres of the web are orientated at an angle of for instance +/- 45° with respect to a longitudinal axis of the fibre fabric, i.e. a biaxial 45/45 fibre fabric.

In alternative embodiments, FBR layers comprising short fibres with a length of less than 250 mm, or less than 100 mm, for instance between 5 mm and 50 mm may be provided. The fibre reinforced protective cladding 16 may comprise only short fibre in random orientation or a combination of layers comprising short fibres in random orientation and long, orientated fibres. Long fibres typically have length of more than 250 mm and are combined to from fibre threads that may have a length of seral meters. With short fibres typically have a random orientation in the matrix of the fibre reinforced plastic layer, long fibres have defined orientation in a respective matrix of the fibre reinforced plastic layer. The fibre reinforced plastic cladding 16 may comprise only long fibres that are orientated in a defined way. Since the fibre reinforced plastic cladding 16 may comprise more than one layer, different kinds of layers may be provided, i.e. layers with randomly orientated short fibres and layers with long fibres extending in defined directions.

To allow bending of a plastic covered protected metal pipe assembly - for instance for laying the pipe in a curved trench - the thermoset plastic material of the protective cladding 16 comprises a reactive plasticizer. The reactive plasticizer preferably comprises Triglycerides, Polyisoprenes, Polybutadienes, Polysiloxanes, Polyethers, Polyester, Polycarbonates and/or their respective functionalised subproducts.

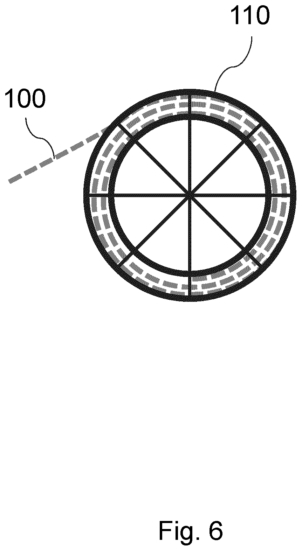

Figure 6 illustrates an embodiment wherein a pipeline 100 is wound around a reel 110. Such embodiment may be used for off-shore pipe-laying. The pipeline 100 is composed of a plurality of pipes 10 that are joint by welding.

The pipes 10 of pipeline 100 comprise a protective fibre reinforced plastic cladding 16. The pipes of the pipeline are joint at their respective longitudinal ends. The protective fibre reinforced plastic cladding 16 of at least some of the pipes comprises fibres wherein at least some of the fibres are arranged at an angle α of more the 20° (α > 20°) and preferably more than 25° or 40° with respect to a longitudinal axis of the pipe.

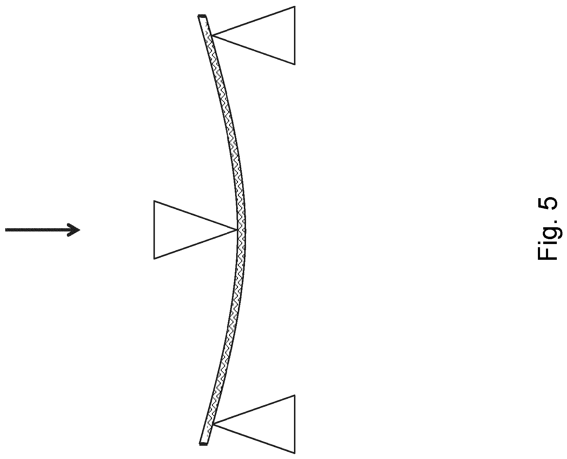

The pipes 10 of pipeline 100 preferably are joint by way of welding. Prior to welding, longitudinal end sections 24 of the pipes are devoid of a protective fibre reinforced plastic cladding. Accordingly, each pipe 10 is provided with a protective fibre reinforced plastic cladding except for their longitudinal end sections 24, see figure 5. The length of each longitudinal end section 24 not being enclosed by a protective fibre reinforced plastic cladding preferably is shorter than 1 m. After welding, a protective fibre reinforced plastic cladding 36 is applied to those longitudinal end sections that were devoid of a protective fibre reinforced plastic cladding prior to welding, thus providing a pipeline that has a protective fibre reinforced plastic cladding 16, 36 that continues over a plurality of pipes 10 of the pipeline 100.

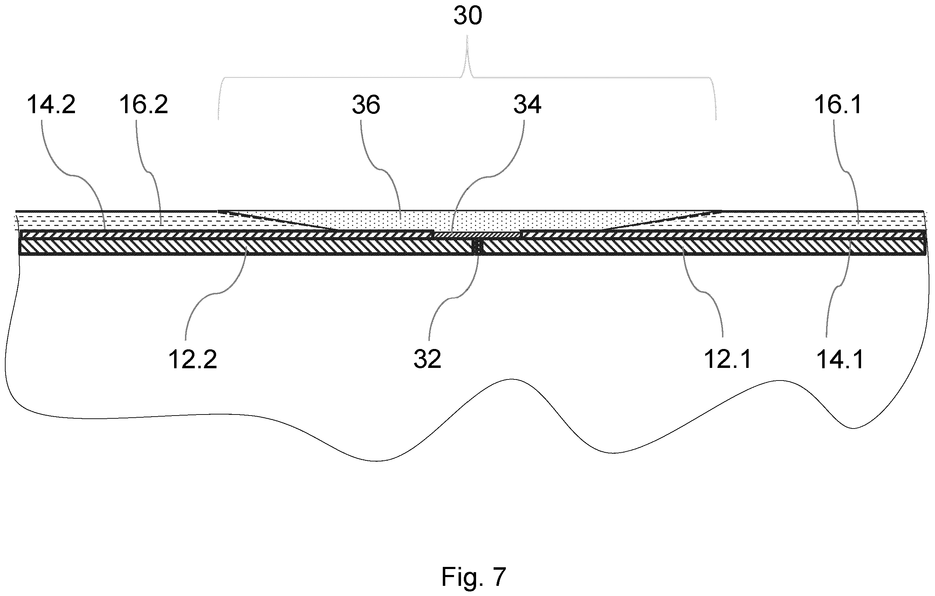

Figure 7 illustrates a wall section of a joint section 30 of a pipeline 100. Metal tubes 12 - preferably steel tubes - are joint at their respective longitudinal ends by way of a weld 32. Next to the weld, no thermoplastic sheath 14 is provided. Therefore, a corrosion protection coating 34 is applied. Finally, a protective fibre reinforced cladding 36 is applied on this joint to overlap with the protective fibre reinforced plastic claddings 16.1 and 16.2 that enclose the joined pipes 10.1 and 10.2. Prior to welding, each of the pipes 10.1 and 10.2 comprises a metal pipe 12.1 and, 12.2, respectively, that is enclosed by a thermoplastic sheath 14.1 and 14.2, respectively. Instead of or in addition to the protective sheath 14.1 or 14.2, a fusion bonded epoxy coating may be provided. The thermoplastic sheath 14.1 and 14.2, respectively, is enclosed by a fibre-reinforced plastic protective cladding 16.1 and 16.2, respectively.

The protective fibre reinforced plastic cladding 16 preferably comprises fibres, such as glass fibres, and a matrix comprising a thermoset resin and a reactive plasticiser. A preferred pipeline therefore is comprised of a plurality of pipes wherein at least some of the pipes are provided with a protective fibre reinforced plastic cladding comprising at least some fibres that are arranged at an angle of more the 20° and preferably more than 40° with respect to a longitudinal axis of the pipe and a that are embedded in a matrix comprising a thermosetting resin and a reactive plasticiser.

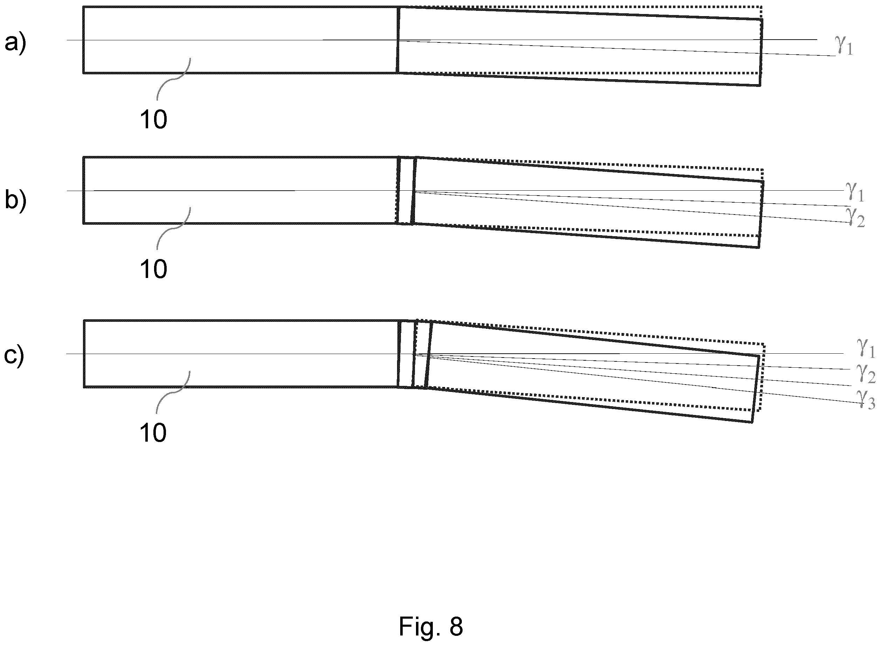

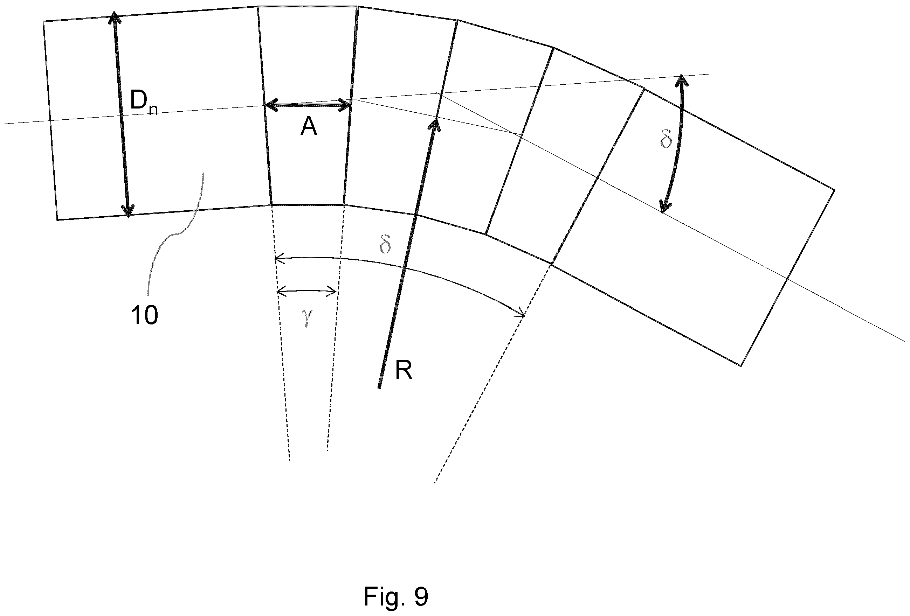

Figures 8 and 9 illustrate cold bending of a pipe prior to joining to a pipeline. In order to achieve a desired final bending angle y, a sequence of smaller bending steps that are longitudinally spaced with respect to the longitudinal axis of the pipe 10 are performed. For achieving a cumulative final bending angle of, for instance, 12°, ten bending steps of about 1,2° may be performed. For achieving a remaining bending angle of 1.2° per bending step, the pipe must be overbend to, for instance, 2° because the pipe recoils due to its elastic properties. This overbending causes massive stress for the fibre reinforced cladding.

Figures 8a to 8c illustrate a sequence of three bending steps. Figure 9 is a schematic diagram wherein the individual bends of a cumulative bending are exaggerated for illustrative purpose. In the example, 5 individual bends of angle γ of 8° each result in a total bending angle δ of 32°. The individual bends are longitudinally spaced from each other with respect to the longitudinal axis of the pipe 10 by a distance A. The resulting bend has a radius R.

In reality, a bending radius of less R of less than 50 time the nominal diameter Dₙ of the pipe can be achieved with a pipe having fibre reinforced protective cladding 16 according to the invention.

In preferred embodiments resulting single bends with an angle γ of 0.4° to 0.5° are sought and are achieved by overbending up to 1.5° to 2°.

### List of reference signs:

- 10: plastic covered protected metal pipe assembly
- 12: metal pipe
- 14: plastic sheath, thermoplastic sheath
- 16: fibre reinforced protective sheath
- 20: inner layer of the fibre reinforced protective cladding
- 22: outer layer of the fibre reinforced protective cladding
- 24: fibre fabric
- 30: joint section
- 32: weld
- 34: corrosion protective coating
- 36: fibre reinforced plastic cladding of a weld joint
- 100: pipeline
- 110: reel for laying a pipeline
- α, β: angle between fibres and longitudinal axis of pipe
- γ: angle of a single bend from a sequence of bends
- δ: resulting cumulative bending angle from the sequence of bends
- A: distance between the individual bends of the sequence of bends
- R: bending radius of the pipe
- Dₙ: nominal outer diameter of the thermoplastic sheathing

## Claims

1. Pipe for a pipeline, the pipe comprising a tube (12) being enclosed by a fibre reinforced protective cladding (16) that comprises reinforcing fibres embedded in a matrix made from a thermoset plastic material, in particular a thermoset resin vinylester resin, polyester resin or epoxy resin, said thermoset plastic material comprising a reactive plasticiser in an amount of between 0.25% and 30% of weight of the matrix.

2. Pipe according to claim 1, wherein the reactive plasticiser comprises Triglycerides, Polyisoprenes, Polybutadienes, Polysiloxanes, Polyethers, Polyesters, Polycarbonates and/or their respective functionalised subproducts.

3. Pipe according to claim 1 or 2, wherein the tube is a metal tube enclosed by a plastic sheath (14), the plastic sheath (14) comprising fusion bonded epoxy or a thermoplastic material or both, fusion bonded epoxy and a thermoplastic material.

4. Pipe according to at least one of claims 1 to 3, wherein the reinforcing fibres are provided as rovings or fibre webs, said rovings or fibre webs being wound around the plastic tube or the plastic sheath (14) in a helical manner.

5. Pipe according to claim 4, wherein said rovings or fibre webs of the fibre reinforced protective cladding (16) are wound around the plastic tube (12') or the plastic sheath (14) in two different winding directions, thus forming at least one right-handed helix and one left-handed helix.

6. Pipe according to at least one of claims 1 to 5, wherein the reinforcing fibres comprise glass fibres, aramid fibres, carbon fibres and/or basalt fibres.

7. Pipe according to at least one of claims 1 to 6, wherein at least 90% of the fibres of the fibre reinforced protective cladding (16) are arranged at an angle of more than 20° with respect to the longitudinal axis of the pipe (10).

8. Pipe according to at least one of claims 1 to 7, wherein the fibre reinforced protective cladding (16) may comprise more than one layer of reinforcing fibres that preferably are applied in a wet-in-wet process.

9. Pipe according to at least one of claims 1 to 8, wherein the fibre reinforced protective cladding (16) comprises at least one layer composed of short fibres embedded in the matrix made from a thermoset plastic material.

10. Pipeline comprising a plurality of pipes according to one of claims 1 to 9, wherein the tube of each pipe are joined by welding.

11. Pipeline according to claim 10, wherein the pipeline (100) has a longitudinal pipe axis and a nominal diameter Dₙ and wherein at least 90% of the fibres of the fibre reinforced cladding (16) have an angle (α) of at least +/- 20° with respect to the longitudinal pipe axis and preferably at least +/- 40° with respect to the longitudinal pipe axis and/or wherein the pipeline has a bending angle of more than 25° and/or a bending radius (R) regarding the longitudinal pipe axis of less than 50 times the nominal diameter Dₙ of the pipeline.

12. Pipe with final cumulative bending angle (γ) of more than 5° and/or a bending radius (R) corresponding to less than 50 times the nominal pipe radius Dₙ, wherein the pipe (10) comprises a tube (12) and a fibre reinforced protective cladding (16), said fibre reinforced protective cladding comprising fibres embedded in a plastic matrix made from vinylester-, polyester- or epoxy-resin, wherein at least some of the fibres of the fibre reinforced protective cladding (16) are orientated at an angle of more than 20° with respect to a longitudinal axis of the pipe.

13. Pipe with bending angle (γ) of more than 5° and/or a bending radius corresponding to less than 50 times the nominal pipe radius Dₙ, wherein the pipe (10) comprises a tube (12) and a fibre reinforced protective cladding (16), said fibre reinforced protective cladding (16) comprising fibres embedded in a plastic matrix made from vinylester-, polyester- or epoxy-resin, wherein the matrix comprises a reactive plasticiser.

14. Pipe with bending angle (γ) of more than 5° and/or a bending radius corresponding to less than 50 times the nominal pipe radius Dₙ, wherein the pipe (10) comprises a tube (12) and a fibre reinforced protective cladding (16), said fibre reinforced protective cladding (16) comprising fibres embedded in a plastic matrix made from vinylester-, polyester- or epoxy-resin, wherein at least some of the fibres of the fibre reinforced protective cladding (16) are orientated at an angle of more than 20° with respect to a longitudinal axis of the pipe and wherein the matrix comprises a reactive plasticiser.

15. Reel with a pipeline according to claim 10 or 11.

16. Method of producing a pipe with a fibre reinforced protective layer, wherein the fibre reinforced protective layer comprises randomly orientated short fibres embedded in a matrix made from a thermoset plastic material, said method comprising the step of spraying or extruding a mixture of non-cured thermoset plastic material and short fibres on an exterior surface of the pipe.
